Europäisches Patentamt

European Patent Office

Office européen des brevets

(11) Publication number: **0 386 043 B1**

# EUROPEAN PATENT SPECIFICATION

(45) Date of publication of patent specification: **07.12.94** (51) Int. Cl.⁵: **C01C 1/242**, C01C 1/24, B01J 2/30

(21) Application number: **88909273.0**

(22) Date of filing: **28.10.88**

(86) International application number: **PCT/AU88/00422**

(87) International publication number: **WO 89/04291 (18.05.89 89/11)**

(54) **GRANULAR AMMONIUM SULPHATE AND PROCESS FOR THE PRODUCTION THEREOF.**

(30) Priority: **02.11.87 US 115920**

(43) Date of publication of application: **12.09.90 Bulletin 90/37**

(45) Publication of the grant of the patent: **07.12.94 Bulletin 94/49**

(84) Designated Contracting States: **AT BE CH DE FR GB IT LI LU NL SE**

(56) References cited:
| | |
|---|---|
| **AU-B-27 818 /30** | **AU-B-84 667 /75** |
| **DE-C- 648 539** | **DE-C- 651 311** |
| **DE-C- 671 784** | **DE-C- 877 297** |
| **US-A- 2 782 097** | **US-A- 4 589 904** |

(73) Proprietor: **RETEC LTD**
**Paringa Road**
**Gibson Island**
**Murarrie**
**Brisbane, OLD 4000 (AU)**

(72) Inventor: **FISCHBEIN, Milton**
**10710-135 Street**
**Edmonton**
**Alberta T5M 1J6 (CA)**
Inventor: **BROWN, Anthony, Martin**
**9 Doheny Street**
**Mt. Gravatt, OLD 4122 (AU)**

(74) Representative: **Hands, Horace Geoffrey et al**
**GEORGE FUERY & CO**
**Whitehall Chambers**
**23 Colmore Row**
**Birmingham B3 2BL (GB)**

## Description

## FIELD OF THE INVENTION

The present invention relates to a process for the production of granular ammonium sulphate, and to the granular ammonium sulphate produced by that process. More specifically, the present invention relates to a granular ammonium sulphate, and to a process for its production, that has an exceptional size and hardness and that remains free-flowing and substantially free from caking during storage.

## DESCRIPTION OF BACKGROUND AND RELEVANT MATERIALS

Ammonium sulphate has a number of important applications, with perhaps the chief among these being agricultural fertilization. In this capacity ammonium sulphate provides a ready source of nitrogen and sulphur, which are critical crop nutrients.

Ammonium sulphate may be produced in a number of ways, including as a by-product of other industries. For example, ammonium sulphate is commonly crystallized from solutions produced as a by-product from coke ovens and caprolactum plants. The production of ammonium sulphate per se, rather than as an incidental by-product, generally involves combining ammonia with sulphuric acid, which results in ammonium sulphate having a crystalline structure.

Ammonium sulphate is often not used as a fertilizer by itself, but rather in combination with other vital plant nutrients. Therefore, in commercial use ammonium sulphate must often be blended with granular fertilizers to produce a balanced fertilizer blend.

Unfortunately, crystalline ammonium sulphate suffers from serious drawbacks which impede its incorporation into fertilizer blends, and which even impair its use as a fertilizer per se. Chief among these drawbacks are small particle size; nonuniform particle size; and an inability to flow freely. These physical properties make it quite difficult to produce fertilizer blends containing ammonium sulphate in which the several constituents are uniformly distributed, which is of course important in achieving optimum results when the fertilizer is spread, and which also facilitates the mechanical ease and efficiency of the spreading process. Even on those occasions when ammonium sulphate is used by itself, the lack of uniformity in particle size causes difficulties in the spreading process and leads to uneven results.

Attempts have been made to overcome these drawbacks by modifying the crystallization processes, for example by using counter-current crystallization. In a conventional crystallization process, crystalline ammonium sulphate particles growing by evaporation in vacuum crystallizers move in numerous steps from hotter stages to cooler stages. In the counter-current process, the fine crystals formed during a cooler stage are led to the next hotter stage, where they are mixed with an evaporating hot solution. Here the cooler crystals serve as nuclei for the formation of crystals from the oversaturated solution resulting from evaporation of the previous (hotter) stage.

Counter-current crystallization suffers from the disadvantage that fuel usage and maintenance costs in the dissolution and recrystallization phases are relatively high, and lead to higher production costs. In addition, there are difficulties with recovering and/or recycling the ammonium sulphate fines left over from processing operations such as screening. Moreover, the ammonium sulphate produced by recovery and recycling of the fines is formed of particles which are angular and irregular in shape. In order to have good commercial utility, ammonium sulphate particles should have a rounded shape and be of a uniform size.

There is a long history of processes for the production of ammonium sulphate, and of attempts to improve on the shape, size, uniformity, and storage characteristics of ammonium sulphate either by modification of crystallization procedures or by the use of granulating techniques:

ADAM et al., U.S. Patent 1,919,707, is directed to a method for the crystallization of ammonium sulphate in the form of elongated crystals that have a high proportion of voids in bulk, which is asserted to prevent caking. The high proportion of voids is said to follow from the elongated shape of the crystals, which is caused in turn by including a metallic salt, such as an iron, chromium, aluminium, titanium, beryllium, zirconium, or yttrium salt, in the sulphuric acid which is reacted with a stream of ammoniacal gas to form the ammonium sulphate crystals.

BERKHOFF, U.S. Patent 2,102,107, is directed to a method of obtaining coarse-grained crystalline ammonium sulphate by adding, to a sulphuric acid liquor used to produce ammonium sulphate crystals, a phosphatic compound such as phosphoric acid or a phosphate. The phosphatic compound is stated to aid in the production of coarse-grained crystals by precipitating out metallic impurities present in the sulphuric acid liquor.

SIMMS, U.S. Patent 2,656,248, is directed to an improved method for operating a plurality of evaporative ammonium sulphate crystallization units by maintaining the pH of the ammonium sulphate mother liquor in each unit within an optimum range. This optimum range is stated to be from about 1.5 to 2.5 (see column 2, lines 30-34).

COSTOLOW, U.S. Patent 2,782,097, is directed to a method for expanding the "metastable" region of an ammonium sulphate solution in a continuous evaporative crystallizer in order to avoid the formation of fines in the crystallizer. This expansion is accomplished by adding, to the ammonium sulphate mother liquor, soluble salts of chromium, iron, and aluminium. The crystallizer is preferably operated at a pH of less than 6, preferably in the range of 2 to 3 (see column 2, lines 4-6 and column 3, lines 50-52).

WILSON, U.S. Patent 3,035,899, is directed to production of granulated ammonium sulphate by contacting a sulphuric acid mixture with ammonia in a turbulent zone, such as a mixing T, to form an ammonium sulphate slurry which is then passed to a heated rotating contacting zone containing recycled product.

BURNS, U.S. Patent 3,351,455 is directed to a dry process for preparing granular ammonium sulphate by contacting recirculated undersize product granules with a mixture of sulphuric acid and ammonia in a granulator. The undersize granules are coated with the reaction mixture product, dried, and screened. The process disclosed by BURNS must be conducted with a granulator effluent stream bulk pH of less than 2.5; if the pH equals or exceeds 2.5, product size decreases so drastically as to require plant shutdown due to plugging of equipment with dust and fine particles (see column 3, lines 24-35, and Example 2 at column5, line 56 through column 6, line 2).

HICKS, U.S. Patent 3,464,809, is directed to a process for the production of granular ammonium sulphate by partially ammoniating sulphuric acid in a preneutralizer vessel and introducing the resulting ammonium sulphate solution into a granulator containing a bed of recycled fines. The onsize product of HICKS is variously shown as having a pH of 1.9, 1.8 (both from Table II in column 9), or 3.8 (see Table III, at column II).

BLACKMORE, U.S. Patent 3,725,029, is directed to a method for granulating by-product ammonium sulphate in a drum granulator, using a concentrated lignosulphonate solution as a binder. The resulting particles are cooled, coated with urea, and then coated with a dry powder in order to prevent caking of the product, which would otherwise occur when the product was allowed to stand during storage.

BARBER, U.S. Patent 3,738,821, is directed to a method for agglomerating or pelletizing ammonium sulphate, by adding phosphoric acid to an aqueous solution of ammonium sulphate which includes free ammonia. This method is practiced in a fluid bed apparatus.

BECHTHOLD; et al., U.S. Patent 4,305,748, is directed to a process for granulating or pelletizing ammonium sulphate by rapidly drying dissolved ammonium sulphate, and placing the ammonium sulphate in a granulating or pelletizing apparatus while adding thereto a fine spray of water.

HARRISON et al., U.S. Patent 4,589,904, is directed to a process for the granulation of crystalline by-product ammonium sulphate. Separate streams of sulphuric acid, ammonium sulphate solution, and gaseous anhydrous ammonia are introduced beneath the surface and near the centre of a rolling granulation bed of crystalline by-product ammonium sulphate in recycle material. This produces fresh ammonium sulphate, which is asserted to precipitate and to bind the crystals together. Mention is made of the optional use of a granulating aid, such as alum (see column 5, lines 12-17). The ammonium sulphate produced by the process of HARRISON et al. is stated to have a crush strength of up to 2.3 kgm, whereas it is stated that a crush strength of 1.36 kg is considered acceptable in the industry (see column 8, lines 65-68).

The process described by HICKS avoids the involvement of crystalline ammonium sulphate in the granulation process, with some corresponding improvement in the shape and consistency of size of the resulting granules. However, the percent recovery of onsize product by HICKS is quite low; for example, Table III of the HICKS patent, in column 11, lines 13-35, demonstrates that only 85.4% of the product falls within the -3.35 mm + 1.68 mm mesh size range. In addition, those of ordinary skill in the art would expect the granular ammonium sulphate produced by HICKS to be of mediocre hardness, which is a serious drawback in handling and processing the granules.

This expectation is confirmed in an article by HICKS et al., 17 Agr. Food Chem. 306-311 (1969). In characterising the physical and chemical properties of granules produced according to a process substantially identical to that disclosed in U.S. Patent 3,464,809, the authors state that after being stored at 80% relative humidity at 30°C for 96 hours, the granules are "fairly firm under finger pressure." This description, while difficult to compare with more quantitative parameters, indicates that granular ammonium sulphate produced according to the HICKS process is very substantially softer than granular ammonium sulphate produced according to the present invention, as will be discussed later.

One common method of granulation, as shown in the above references, is to use a rotary ammoniator granulator. Another common method is to use a pugmill to contact recycle fines with varying proportions of ammonia and sulphuric acid, using granulation aids such as phosphates, ammonium nitrate, urea, or lignosulphates. It has been found that these methods of granulating ammonium sulphate tend to produce a product which is not hard and free-flowing unless granulating aids are used in prohibitively expensive amounts.

These prior art drawbacks have been partially overcome by the recent development of a process for the production of granular ammonium sulphate, in which ammonium sulphate is granulated in the presence of a granulation aid which is an aluminium salt or a ferric salt. In this process, described in Australian Patent 492,758, ammonia and sulphuric acid are first mixed in a pipe reactor to form a slurry. The slurry is distributed onto a bed of ammonium sulphate fines, where further ammoniation occurs, and is then granulated in the presence of the aluminium salt or the ferric salt. The resulting product is free-flowing and non-caking; has a pH of about 4.0 to 4.5, measured in a 10% solution (by weight in water); and has an average Pfizer hardness (as defined below) of about 2.3 kgm. The granulation may be carried out in a conventional apparatus, such as a rotary granulator or a pugmill.

As can be seen from the foregoing discussion there is an ammonium sulphate product pH range which has been closed to the prior art. Representative of the low end of the range are HARRISON et al., showing a possible product pH range of 1.80-2.60, a preferred range of 2.20-2.50, and actual Examples of 1.99-2.4; and BURNS, showing a product pH of less than 2.5, preferably of between 1.9 and 2.25. BURNS was unable to operate above a product pH of 2.5 because, as stated therein, at any higher pH dust and fines would form in such quantities as to force a plant shutdown.

Representative of the high side of the range is Australian Patent 492,758, which operates in a product pH range of 4.0-4.5. Based on Applicants' experience attempts to operate at a pH of lower than 4.0 using this process would result in granular ammonium sulphate which sets to a concrete mass during storage, and is thus quite unusable.

According to the present invention, the process for producing granular ammonium sulphate in the presence of an aluminium or ferric salt, as in Australian Patent 492,758, has been dramatically improved by conducting granulation within a pH range that was considered completely unusable by the prior art, followed by rapid cooling of the resulting granular ammonium sulphate. By discovering a technique for producing granular ammonium sulphate within this previously unappreciated pH range, Applicants have succeeded in making a product that far exceeds prior art granular ammonium sulphate in size distribution as well as in hardness.

## SUMMARY OF THE INVENTION

The present invention is directed to a process for producing free-flowing, non-caking granular ammonium sulphate. The process, which involves adding a granulating aid to a slurry of ammonia and sulphuric acid, may be carried out under sufficiently acidic conditions to yield granular ammonium sulphate with a pH of less than about 4.0; preferably of between about 2.5 and 4.0; and most preferably of between about 2.5 and 2.9, with an average pH of about 2.7. The granules are rapidly cooled prior to their storage.

The granulating aid may be a metal oxide or a salt of a metal hydroxide, such as aluminium oxide or sodium aluminate, or a metal salt, for example an aluminium salt or a ferric salt, preferably the sulphate salt. Aluminium sulphate is most preferred.

The granulating aid is added to the slurry in an amount suffficient to yield ammonium sulphate granules comprising more than about 0.05 percent by weight of the metal. When the granulating aid is an aluminium salt, the amount of the aluminium salt added to the slurry is sufficient to produce ammonium sulphate granules having an aluminium content of between about 0.05% and 1.06% by weight; preferably of between about 0.15% and 1.06% by weight; and most preferably of between about 0.20% and 0.40% by weight.

The present invention also includes a composition of matter comprising ammonium sulphate granules produced according to the method as described above.

The process of the invention includes cooling the ammonium sulphate granules after granulating. The granules are usually cooled to a temperature of less than about 65°C; preferably to a temperature of between about 15°C and 54°C; and most preferably to a temperature of between about 43°C and 54°C.

The rate of cooling is generally greater than about 4.2° c/min, preferably between about 5.3 and 9.2° c/min, and most preferably between about 5.3 and 6.4°/min.

This cooling may be accomplished using any suitable means, such as a rotary cooler or a fluidized bed cooler.

In the production of granular ammonium sulphate according to the present invention, more than about 85.7% of the product ammonium sulphate granules equal or exceed +10 Tyler mesh screen size; preferably more than about 95% of the product ammonium sulphate granules equal or exceed +10 Tyler

4

mesh screen size; and most preferably at least about 99% of the product ammonium sulphate granules equal or exceed +10 Tyler mesh screen size.

The process according to the present invention yields ammonium sulphate granules having a Pfizer hardness of greater than about 2.3 kgm; preferably of greater than about 3.1 kgm; and most preferably at least about 4.5 kgm, with a usual hardness range of between about 4.5 and 5.8 kgm.

The present invention is further directed to a composition of matter comprising free-flowing, non-caking ammonium sulphate granules having a pH of less than about 4.0; preferably of between about 2.5 and 4.0; and most preferably of between about 2.5 and 2.9, with an average pH of about 2.7.

The ammonium sulphate granules may comprise a metal selected from the group consisting of aluminium and iron. The granules preferably include aluminium as the metal, and have an aluminium content of more than about 0.05% by weight. The aluminium content is generally between about 0.05% and 1.06% by weight; preferably between about 0.15% and 1.06% by weight; and most preferably between about 0.20% and 0.40% by weight.

The ammonium sulphate granules may have a Pfizer hardness of greater then about 3.1 kgm; preferably, of at least about 4.5 kgm, and most preferably of between about 4.5 and 5.8 kgm.

In addition, more than about 85.7% of the ammonium sulphate granules equal or exceed +1.68 mm screen size; preferably more than about 95% of the ammonium sulphate granules equal or exceed +1.68 mm screen size; and most preferably at least about 99% of the ammonium sulphate granules equal or exceed 1.68 mm screen size.

## DESCRIPTION OF PREFERRED EMBODIMENTS

Prior experience with varying the pH at which granulation of ammonium sulphate is carried out was thought to have established that there are certain pH values within which a commercially useful product cannot be made.

Assuming that excessive production of fines and dust does not require plant shutdown, granular ammonium sulphate produced at pH levels within this range can cake during storage, is not free-flowing, and can even set up into an adhered mass which will need to be broken apart with heavy machinery before it can be used.

It has now been discovered that this pH range can be exploited, producing a commercially valuable product of a hardness and uniformity of size unknown in the prior art. As a result of being able to operate within this range of pH, ammonium sulphate granules can be produced which are substantially larger and harder than prior art ammonium sulphate granules, and the percentage of product ammonium sulphate granules that exceed +10 Tyler mesh is significantly greater than the prior art.

The process according to the present invention generally involves the formation of an ammonium sulphate slurry by mixing ammonia and sulphuric acid in a pipe reactor. The ammonium sulphate slurry is introduced onto a bed of recycled ammonium sulphate fines, where further ammoniation takes place. Granulation is then carried out in the presence of a granulating aid, and the resulting product is dried, screened, and cooled. Any conventional granulating system may be used, including rotary granulators and pugmills.

The granulating aid may be a metal oxide, preferably hydrated, such as aluminium oxide; a salt of a metal hydroxide, such as sodium aluminate; an aluminium salt; or a ferric salt. Aluminium salts are preferred, with aluminium sulphate being most preferred. Wher the granulating aid contains aluminium, the aluminium should be present in a soluble form.

The aluminium oxide granulating aid is preferably used in the form of a slurry, while the aluminium or ferric salt may conveniently be introduced to the ammonium sulphate slurry in the form of an aqueous solution. Generally, the aqueous solution is introduced into the slurry in the pipe reactor. However, the aqueous solution may be metered into the granulation apparatus at any convenient location, such as adjacent the inlet thereof. Alternatively, the aluminium or ferric salt may be added to the granulator or to the recycle in solid form, by means of a feeding apparatus.

Where an aluminium salt is used, it is generally used in an amount sufficient to give a final product containing more than about 0.05% by weight of aluminium. Preferably the product contains between about 0.05 and 1.06% by weight of aluminium, even more preferably between about 0.15 and 1.06%, and most preferably the aluminium content is between about 0.25 and 0.40% by weight.

The product may contain phosphate derived from the starting materials or phosphate may be deliberately added. The presence of phosphate may favorably affect the granulation of the ammonium sulphate.

The process according to the present invention is conducted at a pH sufficient to yield ammonium sulphate granules with a pH of less than about 4.0, measured in a 10% solution, and the pH may be as low as about 2.5.

Granules produced according to the present invetnion and exhibiting a pH of between about 2.5 and 4.0 show no caking during storage, as initially indicated by performing accelerated caking tests on such granules. 100 gram samples of granular ammonium sulphate were placed in a stainless steel tube with an outer diameter of 50 mm. The samples were pressurised to 240 kpa, using a pneumatic piston, and stored for one week at a temperature of 85°F. The samples were then removed from the stainless steel tube and examined for caking; no caking was observed.

The accelerated caking tests were confirmed by a series of full-scale production runs producing ammonium sulphate granules having pH values of from 2.5-4.0. The granules were cooled in accordance with the present invention and stored in commercial-sized storage piles of 400-10,000 tons.

After several weeks of storage, the product remained free-flowing and free from caking.

After leaving the drying step the granules are screened and cooled prior to storage. Without being bound by this theory, it is thought that the non-caking properties of the low pH granules result from the rapid cooling of the granules, such as in a rotary cooler, generally from an initial temperature of about 107°C to a pre-storage temperature of about 49°C.

The rate of cooling is generally greater than about 4.2°C/min, preferably between about 5.3 and 9.2°C/min, and most preferably between about 5.2 and 6.4°C/min.

While the cooling should be rapid, any suitable means may be employed, including but not limited to a rotary cooler or a fluidised bed cooler. The critical factor is not how the granules are cooled, but rather that they be cooled to a pre-storage temperature of less than about 65°C and preferably of between about 15°C and 54°C, with a pre-storage temperature of between about 43 and 54°C being most preferred.

Granulated ammonium sulphate produced according to this process remains free-flowing and does not consolidate or set to a hard mass upon being allowed to stand in large piles during storage. In addition, the resulting ammonium sulphate granules are substantially harder then granular ammonium sulphate known to the prior art.

The hardness of the granules is measured with a commercial compression tester, such as a Chatillon compression tester. At least 25 granules within the size range of -2.83 mm + 2.41 mm from a given product run are tested individually, and the average of these measurements is taken as the Pfizer hardness of the product run from which the tested granules were taken. The granules are placed, one at a time, on a flat surface provided on the compression tester. Pressure is applied to each granule using a flat-end rod attached to the compression tester, and a guage mounted in the compression tester measures the pressure required to fracture the granule. Ammonium sulphate granules produced according to the process of the present invention generally possess a Pfizer hardness in the range of from 4.45 to 5.8 kgm, while prior art granular ammonium sulphate has typical Pfizer hardness values of 2.3 kgm or less.

Due to the superior size and hardness of the granules, ammonium sulphate produced according to the present invention experiences minimal breakdown into undesireably small fragments during cooling, storage, handling, blending, shipping and spreading.

Moreover, use of granular ammonium sulphate produced according to the present invention, either as a fertilizer per se or as an ingredient in fertilizer blends, produces exceptionally uniform results. This follows from the fact that the mechanics of spreading fertilizer are improved by use of a physically more uniform product, resulting in more uniform spreading. In addition, when fertilizer blends are used, blends using granular ammonium sulphate produced according to the present invention will remain uniformly blended, rather than tending to layer out by component by the time the end user is reached as is often the case with prior art blends.

It should be noted that in the process according to the present invention, ammonium sulphate fines produced therein are recycled through the granulation apparatus, where they are formed into the bed onto which the slurry containing ammonium sulphate is distributed. While the recycle ratio generally ranges from about 7:1 to 20:1, ratios as low as about 2.5:1 have been achieved.

The present invention may be further appreciated by reference to the following Examples. It is to be understood that these Examples are merely illustrative and in no way define or limit the scope of the present invention, which extends to any and all compositions, means, and methods suited for practice of the process according to the present invention, as well as to any and all products made thereby.

The following examples demonstrate production of ammonium sulphate granules according to the present invention which, although produced with a low pH which results in larger and in harder granules, are free-flowing and non-caking:

6

EXAMPLE 1

Granulation was conducted at a production rate of 25 TPH. The pH of the resulting granular ammonium sulphate product ranged from about 2.8 to 3.1. The aluminium content of the resulting product ranged from about 0.31% to 0.36% by weight, and the average product temperature exiting the cooler ranged from about 44°C to 54°C. The product ranged in Pfizer hardness from about 4.45 to 5.8 kgm. Product size was between about 91.1 and 94.3%, on the -3.35 mm + 1.68 mm range, and did not cake during storage.

EXAMPLE II

Granulation was conducted at a production rate of 25 TPH. The pH of the resulting granular ammonium sulphate product was about 2.9, and the aluminium content was about 0.27% by weight. The average product temperature exiting the cooler was about 34°C, and the product had a Pfizer hardness of about 4.6 kgm. About 93.3% of the product fell within the -3.35 mm + 1.68 mm range, and the product did not cake during storage.

The following example demonstrates a typical cooling set-up for the practice of the process according to the present invention:

EXAMPLE III

Dried and screened granular ammonium sulphate produced as in either Example I or Example II is introduced into a rotary drum cooler, counter to the air flow. Product entering the rotary cooler has a temperature of about 107°C, which has been reduced to about 49°C when product leaves the cooler. For a rotary cooler 9.15 m feet long and 2.43 m in diameter, typical flow rates range from about 15 tne/hr to about 29 tne/hr, with a flow rate of about 25 tne/hr being typical.

EXAMPLE IV

Granulation was conducted at a production rate of approximately 25 tonnes/hour over a 24-hour period. Product exiting the cooler was determined to have a temperature of about 540°C, and was hard, free-flowing, and non-caking.

A 24-hour composite sample of the 600 tonnes of product produced during this run had the following chemical and physical properties:

| Chemical Composition | Weight % |
|---|---|
| N | 20.5 |
| S | 24.3 |
| $H_2O$ | 0.02 |
| Al | 0.33 |
| pH | 2.8 |

| Product Size | Product Size | Product Size | Product Size |
|---|---|---|---|
| +3.35 mm 3.0 | -3.35 mm + 2.4 mm 69.7 | -2.4 mm + 1.68 mm 26.3 | -1.68 mm + 0.84 mm 1.0 |

The following Tables exemplify the range of operating conditions by which the process according to the present invention may be practiced, but are not to be construed as in any way limiting. As may be clearly seen, the production of ammonium sulphate granules having a pH according to the process of the present invention yields a dramatic increase in hardness, which as previously demonstrated is not nullified by a loss of commercial utility through caking during storage.

7

## TABLE 1
### Summary of Product Quality and Operating Conditions
### For Granular Ammonium Sulphate Production

| Product pH | Product Aluminium (%Wt.) | Cooler Outlet Temperature (°C) | Pfizer Hardness (KGM) |
|---|---|---|---|
| 2.90 | 0.27 | 34 | 4.6 |
| 3.00 | 0.35 | 50 | 4.45 |
| 2.80 | 0.36 | 44.4 | 4.91 |
| 3.10 | 0.34 | 47.2 | 5.68 |
| 2.80 | 0.31 | 54.4 | 5.54 |
| 2.95 | 0.31 | 50.0 | 5.77 |

### TABLE 1 (con't)

| Product Size -3.35 + 1.68 mm (%) | Product Size +3.35 mm (%) | Product Size -1.68 mm (%) | 24 Hour Production TNE |
|---|---|---|---|
| 93.3 | 2.2 | 4.5 | 594 |
| 92.0 | 5.0 | 3.0 | 594 |
| 91.1 | 4.1 | 4.8 | 334 |
| 92.4 | 4.8 | 2.8 | 384 |
| 94.3 | 3.0 | 2.7 | 582 |
| 91.9 | 2.9 | 5.2 | 532 |

TABLE 2

| The following table demonstrates the outstanding onsize product yield attainable according to the present invention: | | | |
|---|---|---|---|
| Product Run | +1.68 Total (%) | +3.35 + 1.68 mm (%) | +3.35 (%) |
| 1 | 98.4 | 92.2 | 6.2 |
| 2 | 99.0 | 96.0 | 3.0 |
| 3 | 98.0 | 93.8 | 4.2 |
| 4 | 98.0 | 91.6 | 6.4 |
| 5 | 98.0 | 91.1 | 6.9 |

TABLE 3

| Correlation of Pfizer Hardness Verses Product pH | | | |
|---|---|---|---|
| Sample Number | Product pH | Product Aluminium (% wt.) | Pfizer Hardness (KGM) |
| 1 | 4.3 | 0.28 | 3.05 |
| 2 | 4.30 | 0.29 | 3.14 |
| 3 | 3.80 | 0.36 | 3.5 |
| 4 | 4.60 | 0.39 | 4.2 |
| 5 | 4.10 | N/A | 4.2 |
| 6 | 3.20 | N/A | 3.8 |
| 7 | 2.90 | N/A | 4.6 |
| 8 | 3.00 | 0.35 | 4.45 |
| 9 | 2.80 | 0.36 | 4.9 |
| 10 | 3.10 | 0.34 | 5.7 |
| 11 | 2.80 | 0.31 | 5.5 |
| 12 | 2.95 | 0.31 | 5.8 |
| 13 | 4.80 | 0.32 | 4.0 |
| 14 | 4.00 | 0.39 | 3.5 |

Although the invention has been described with respect to the preferred embodiments discussed above, it is clearly understood that this is by way of example only, and that the invention is not limited to the particulars disclosed.

**Claims**

1. A method for producing free-flowing, non-caking granular ammonium sulphate having a pH of less than about 4.0 in the presence of a granulating aid, said method comprising the steps of:

   a) adding a granulating aid selected from the group consisting of a metal salt, a metal oxide, and a salt of a metal hydroxide, to a slurry of ammonia and sulphuric acid;

   b) granulating said slurry to produce ammonium sulphate granules under sufficiently acidic conditions that said ammonium sulphate granules have a pH of less than about 4.0; and

   c) rapidly cooling said ammonium sulphate granules after granulating prior to storage of said granules.

2. A method as defined in Claim 1, wherein said ammonium sulphate granules have a pH of between about 2.5 and 4.0.

3. A method as defined in Claim 2, wherein said ammonium sulphate granules have a pH of between about 2.5 and 2.9.

4. A method as defined in Claim 3, wherein said ammonium sulphate granules have a pH of about 2.7.

5. A method as defined in any one of Claims 1 to 4, wherein said granulating aid is added to said slurry in an amount sufficient to yield ammonium sulphate granules comprising more than about 0.05 percent by weight of said metal.

6. A method as defined in Claim 5, wherein said metal is selected from the group consisting of iron and aluminium.

7. A method as defined in Claim 6, wherein said granulating aid is selected from the group consisting of aluminium sulphate, ferric sulphate, aluminium oxide and sodium aluminate.

8. A method as defined in Claim 7, wherein said granulating aid is an aluminium salt.

9. A method as defined in Claim 8, wherein the amount of said aluminium salt added to said slurry is sufficient to produce ammonium sulphate granules having an aluminium content of between about 0.05% and 1.06% by weight.

10. A method as defined in Claim 9, wherein the amount of said aluminium salt added to said slurry is sufficient to produce ammonium sulphate granules having an aluminium content of between about 0.15% and 1.06% by weight.

11. A method as defined in Claim 10, wherein the amount of said aluminium salt added to the slurry is sufficient to produce ammonium sulphate granules having an aluminium content of between about 0.20% and 0.40% by weight.

12. A method as defined by any one of Claims 1 to 11, wherein said ammonium sulphate granules are cooled to a temperature of less than about 65°C.

13. A method as defined in Claim 12, wherein said ammonium sulphate granules are cooled to a temperature of between about 15 and 54°C.

14. A method as defined in Claim 13, wherein said ammonium sulphate granules are cooled to a temperature of between about 43° and 54°C.

15. A method as defined in any one of Claims 1 to 14, wherein said ammonium sulphate granules are cooled at a rate of greater than about 4.2°C/minute.

16. A method as defined in Claim 15, wherein said ammonium sulphate granules are cooled at a rate of between about 5.3 and 9.2°C/minute.

17. A method as defined in Claim 16, wherein said ammonium sulphate granules are cooled at a rate of between about 5.3 and 6.4°C/minute.

18. A method as defined in any one of Claims 1 to 17, further comprising using a rotary cooler for said cooling.

19. A method as defined in any one of Claims 1 to 17, further comprising using a fluidized bed for said cooling.

20. A method as defined in any one of Claims 1 to 19, wherein more than about 85.7% of said ammonium sulphate granules equal or exceed 1.68 mm screen size.

21. A method as defined in Claim 20, wherein more than about 95% of said ammonium sulphate granules equal or exceed 1.68 mm screen size.

22. A method as defined in Claim 21, wherein at least about 99% of said ammonium sulphate granules equal or exceed 1.68 mm screen size.

23. A method as defined in any one of Claims 1 to 22, wherein said ammonium sulphate granules have a Pfizer hardness of greater than about 2.3 kgm.

24. A method as defined in Claim 23, wherein said ammonium sulphate granules have a Pfizer hardness of greater than about 3.1 kgm.

25. A method as defined in Claim 24, wherein said ammonium sulphate granules have a Pfizer hardness of at least about 4.45 kgm.

26. A method as defined in Claim 25, wherein said ammonium sulphate granules have a Pfizer hardness of between about 4.45 and 5.8 kgm.

27. A composition of matter comprising free-flowing, non-caking ammonium sulphate granules having a pH of less than about 4.0, a Pfizer hardness of greater than about 2.3 kgm and wherein more than about 85.7% of said granules equal or exceed 1.68mm screen size.

**Patentansprüche**

1. Verfahren zum Herstellen von fließfähigem, nicht zusammenbackendem Ammoniumsulfatgranulat mit einem pH-Wert von weniger als etwa 4,0 in Anwesenheit eines Granulationshilfsmittels, mit folgenden Verfahrensschritten:

   a) Hinzufügen eines Granulationsmittels, ausgewählt aus der Gruppe bestehend aus einem Metallsalz, einem Metalloxid und einem Salz eines Metallhydroxids, zu einem Schlamm aus Ammoniak und Schefelsäure;

   b) Granulieren des Schlamms zur Herstellung von Ammoniumsulfatgranalien unter ausreichend sauren Bedingungen, so daß die Ammoniumsulfatgranalien einen pH-Wert von weniger als etwa 4,0 aufweisen; und

   c) schnelles Ankühlen der Ammoniumsulfatgranalien nach dem Granulieren und vor dem Lagern der Granalien.

2. Verfahren nach Anspruch 1, dadurch gekennzeichnet, daß die Ammoniumsulfatgranalien einen pH-Wert zwischen etwa 2,5 und 4,0 haben.

3. Verfahren nach Anspruch 2, dadurch gekennzeichnet, daß die Ammoniumsulfatgranalien einen pH-Wert zwischen etwa 2,5 und 2,9 haben.

4. Verfahren nach Anspruch 3, dadurch gekennzeichnet, daß die Ammoniumsulfatgranalien einen pH-Wert von etwa 2,7 haben.

5. Verfahren nach einem der Ansprüche 1 bis 4, dadurch gekennzeichnet, daß das Granulationshilfsmittel dem Schlamm in einer Menge zugegeben wird, die ausreicht, um Ammoniumsulfatgranalien mit mehr als etwa 0,05 Gew.-% dieses Metalls zu erhalten.

6. Verfahren nach Anspruch 5, dadurch gekennzeichnet, daß das Metall aus einer Gruppe, bestehend aus Eisen und Aluminium, ausgewählt wird.

7. Verfahren nach Anspruch 6, dadurch gekennzeichnet, daß das Granulationshilfsmittel aus einer Gruppe, bestehend aus Aluminiumsulfat, Ferritsulfat, Aluminiumoxid und Natriumaluminat, ausgewählt wird.

8. Verfahren nach Anspruch 7, dadurch gekennzeichnet, daß das Granulationshilfsmittel ein Aluminiumsalz ist.

9. Verfahren nach Anspruch 8, dadurch gekennzeichnet, daß die Menge des dem Schlamm zugeführten Aluminiumsalzes ausreicht, um Ammoniumsulfatgranalien herzustellen, die einen Aluminiumgehalt zwischen etwa 0,05 und 1,06 Gew.-% aufweisen.

10. Verfahren nach Anspruch 9, dadurch gekennzeichnet, daß die Menge des dem Schlamm zugeführten Aluminiumsalzes ausreicht, um Ammoniumsulfatgranalien herzustellen, die einen Aluminiumgehalt zwischen etwa 0,15 und 1,06 Gew.-% aufweisen.

11. Verfahren nach Anspruch 10, dadurch gekennzeichnet, daß die Menge des dem Schlamm zugeführten Aluminiumsalzes ausreicht, um Ammoniumsulfatgranalien herzustellen, die einen Aluminiumgehalt zwischen etwa 0,20 und 0,40 Gew.-% aufweisen.

12. Verfahren nach einem der Ansprüche 1 bis 11, dadurch gekennzeichnet, daß die Ammoniumsulfatgranalien auf eine Temperatur unter etwa 65 °C abgekühlt werden.

13. Verfahren nach Anspruch 12, dadurch gekennzeichnet, daß die Ammoniumsulfatgranalien auf eine Temperatur zwischen etwa 15° und 54 °C abgekühlt werden.

14. Verfahren nach Anspruch 13, dadurch gekennzeichnet, daß die Ammoniumsulfatgranalien auf eine Temperatur zwischen ungefähr 43° und 54 °C abgekühlt werden.

**15.** Verfahren nach einem der Ansprüche 1 bis 14, dadurch gekennzeichnet, daß die Ammoniumsulfatgranalien mit einer Geschwindigkeit von mehr als etwa 4,2 °C/min abgekühlt werden.

**16.** Verfahren nach Anspruch 15, dadurch gekennzeichnet, daß die Ammoniumsulfatgranalien mit einer Geschwindigkeit zwischen etwa 5,3 und 9,2 °C/min abgekühlt werden.

**17.** Verfahren nach Anspruch 16, dadurch gekennzeichnet, daß die Ammoniumsulfatgranalien mit einer Geschwindigkeit zwischen ungefähr 5,3 ° und 6,4 °C/min abgekühlt werden.

**18.** Verfahren nach einem der Ansprüche 1 bis 17, dadurch gekennzeichnet, daß es ferner die Verwendung eines Rotationskühlers zur Kühlung umfaßt.

**19.** Verfahren nach einem der Ansprüche 1 bis 17, dadurch gekennzeichnet, daß es ferner ein Fließbett für die Kühlung verwendet.

**20.** Verfahren nach einem der Ansprüche 1 bis 19, dadurch gekennzeichnet, daß mehr als etwa 85,7 % der Ammoniumsulfatgranalien gleich oder größer als 1,68 mm Siebgröße sind.

**21.** Verfahren nach Anspruch 20, dadurch gekennzeichnet, daß mehr als 95% der Ammoniumsulfatgranalien gleich oder größer 1,68 mm Siebgröße sind.

**22.** Verfahren nach Anspruch 21, dadurch gekennzeichnet, daß wenigstens etwa 99% der Ammoniumsulfatgranalien gleich oder größer 1,68 mm Siebgröße sind.

**23.** Verfahren nach einem der Ansprüche 1 bis 22, dadurch gekennzeichnet, daß die Ammoniumsulfatgranalien eine Pfizer-Härte von mehr als etwa 2,3 kgm aufweisen.

**24.** Verfahren nach Anspruch 23, dadurch gekennzeichnet, daß die Ammoniumsulfatgranalien eine Pfizer-Härte von mehr als etwa 3,1 kgm aufweisen.

**25.** Verfahren nach Anspruch 24, dadurch gekennzeichnet, daß die Ammoniumsulfatgranalien eine Pfizer-Härte von wenigstens etwa 4,45 kgm aufweisen.

**26.** Verfahren nach Anspruch 25, dadurch gekennzeichnet, daß die Ammoniumsulfatgranalien eine Pfizer-Härte zwischen etwa 4,45 und 5,8 kgm aufweisen.

**27.** Stoffverbindung, enthaltend fließfähige, nicht zusammenbackende Ammoniumsulfatgranalien mit einem pH-Wert von weniger als etwa 4,0, einer Pfizer-Härte von mehr als etwa 2,3 kgm und wobei mehr als etwa 85,7 % der Granalien gleich oder größer 1,68 mm Siebgröße sind.

**Revendications**

**1.** Procédé pour produire du sulfate d'ammonium granulaire à écoulement libre, ne prenant pas en mottes, ayant un pH inférieur à environ 4,0, en présence d'un auxiliaire de granulation, ledit procédé comprenant les étapes consistant :

(a) à ajouter à une suspension d'ammoniaque et d'acide sulfurique un auxiliaire de granulation choisi parmi l'ensemble comprenant les sels métalliques, les oxydes métalliques et les sels d'hydroxydes métalliques ;

(b) à granuler cette suspension pour produire des granulés de sulfate d'ammonium dans des conditions suffisamment acides pour que les granulés de sulfate d'ammonium aient un pH inférieur à environ 4,0 ; et

(c) à refroidir rapidement les granulés de sulfate d'ammonium après la granulation et avant stockage des granulés.

**2.** Procédé selon la revendication 1, dans lequel les granulés de sulfate d'ammonium ont un pH d'environ 2,5 à 4,0.

3. Procédé selon la revendication 2, dans lequel les granulés de sulfate d'ammonium ont un pH compris entre environ 2,5 et 2,9.

4. Procédé selon la revendication 3, dans lequel les granulés de sulfate d'ammonium ont un pH d'environ 2,7.

5. Procédé selon l'une quelconque des revendications 1 à 4, dans lequel l'auxiliaire de granulation est ajouté à la suspension en une quantité suffisante pour donner des granulés de sulfate d'ammonium comprenant plus d'environ 0,05 % en poids du métal.

6. Procédé selon la revendication 5, dans lequel le métal est choisi parmi l'ensemble comprenant le fer et l'aluminium.

7. Procédé selon la revendication 6, dans lequel l'auxiliaire de granulation est choisi parmi l'ensemble comprenant le sulfate d'aluminium, le sulfate ferrique, l'oxyde d'aluminium et l'aluminate de sodium.

8. Procédé selon la revendication 7, dans lequel l'auxiliaire de granulation est un sel d'aluminium.

9. Procédé selon la revendication 8, dans lequel la quantité du sel d'aluminium ajoutée à la suspension est suffisante pour produire des granulés de sulfate d'ammonium ayant une teneur en aluminium comprise entre environ 0,05 et 1,06 % en poids.

10. Procédé selon la revendication 9, dans lequel la quantité du sel d'aluminium ajoutée à la suspension est suffisante pour produire des granulés de sulfate d'ammonium ayant une teneur en aluminium comprise entre environ 0,15 et 1,06 % en poids.

11. Procédé selon la revendication 10, dans lequel la quantité du sel d'aluminium ajoutée à la suspension est suffisante pour produire des granulés de sulfate d'ammonium ayant une teneur en aluminium comprise entre environ 0,20 et 0,40 % en poids.

12. Procédé selon l'une quelconque des revendications 1 à 11, dans lequel les granulés de sulfate d'ammonium sont refroidis à une température inférieure à environ 65 °C.

13. Procédé selon la revendication 12, dans lequel les granulés de sulfate d'ammonium sont refroidis à une température comprise entre environ 15 et 54 °C.

14. Procédé selon la revendication 13, dans lequel les granulés de sulfate d'ammonium sont refroidis à une température comprise entre environ 43 et 54 °C.

15. Procédé selon l'une quelconque des revendications 1 à 14 , dans lequel les granulés de sulfate d'ammonium sont refroidis à une vitesse supérieure à environ 4,2 °C/minute.

16. Procédé selon la revendication 15, dans lequel les granulés de sulfate d'ammonium sont refroidis à une vitesse comprise entre environ 5,3 et 9,2 °C/minute.

17. Procédé selon la revendication 16, dans lequel les granulés de sulfate d'ammonium sont refroidis à une vitesse comprise entre environ 5,3 et 6,4 °C/minute.

18. Procédé selon l'une quelconque des revendications 1 à 17, qui consiste en outre à utiliser pour le refroidissement un réfrigérant rotatif.

19. Procédé selon l'une quelconque des revendications 1 à 17, qui consiste en outre à utiliser pour le refroidissement un lit fluidisé.

20. Procédé selon l'une quelconque des revendications 1 à 19, dans lequel plus d'environ 85,7 % des granulés de sulfate d'ammonium ont une granulométrie supérieure ou égale à 1,68 mm.

**21.** Procédé selon la revendication 20, dans lequel plus d'environ 95 % des granulés de sulfate d'ammonium ont une granulométrie supérieure ou égale à 1,68 mm.

**22.** Procédé selon la revendication 21, dans lequel au moins environ 99 % des granulés de sulfate d'ammonium ont une granulométrie supérieure ou égale à 1,68 mm.

**23.** Procédé selon l'une quelconque des revendications 1 à 22, dans lequel les granulés de sulfate d'ammonium ont une dureté Pfizer supérieure à environ 2,3 kgm (22,6 Nm).

**24.** Procédé selon la revendication 23, dans lequel les granulés de sulfate d'ammonium ont une dureté Pfizer supérieure à environ 3,1 kgm (30,4 Nm).

**25.** Procédé selon la revendication 24, dans lequel les granulés de sulfate d'ammonium ont une dureté Pfizer d'au moins environ 4,45 kgm (43,6 Nm).

**26.** Procédé selon la revendication 25, dans lequel les granulés de sulfate d'ammonium ont une dureté Pfizer comprise entre environ 4,45 et 5,8 kgm (entre environ 43,6 et 56,9 Nm).

**27.** Composition de matière comprenant des granulés de sulfate d'ammonium à écoulement libre, ne prenant pas en mottes, ayant un pH inférieur à environ 4,0, une dureté Pfizer supérieure à environ 2,3 kgm (22,6 Nm), et où plus d'environ 85,7 % des granulés ont une granulométrie supérieure ou égale à 1,68 mm.

14